# FASCICULE DE BREVET EUROPEEN

(11) **EP 2 108 167 B1**
(45) Date de publication et mention de la délivrance du brevet: **09.06.2010**
(21) Numéro de dépôt: 08706964.7
(22) Date de dépôt: 08.01.2008
(51) Int. Cl.: G06K 9/00

(54) **PROCÉDÉ DE TRAITEMENT D'UNE IMAGE D'UNE EMPREINTE**
VERFAHREN ZUR BEARBEITUNG EINES GEPRÄGTEN BILDES
METHOD FOR PROCESSING AN IMPRINT IMAGE

(30) Priorité: 09.01.2007 FR 0700100
(43) Date de publication de la demande: 14.10.2009
(73) Titulaire: SAGEM Sécurité, 75015 Paris (FR)
(72) Inventeur: MORIN, Amélie, 75015 Paris (FR); FOURRE, Joël-Yann, 75015 Paris (FR); PICARD, Sylvaine, 75015 Paris (FR)
(74) Mandataire: Maillet, Alain
(86) Numéro de dépôt international: PCT/EP2008/000059
(87) Numéro de publication internationale: WO 2008/083945

(56) Documents cités:
- WO-A-99/28701
- GEPPY PARZIALE ET AL: "The Surround ImagerTM: A Multi-camera Touchless Device to Acquire 3D Rolled-Equivalent Fingerprints" PROC. INTL CONF ON ADVANCES IN BIOMETRICS, 5 janvier 2006 (2006-01-05), - 7 janvier 2006 (2006-01-07) pages 244-250, XP019026883 Hong Kong

## Description

La présente invention concerne un procédé de traitement d'au moins une image d'une empreinte d'un individu, ainsi qu'un dispositif de traitement mettant en oeuvre un tel procédé. Elle trouve application dans le domaine de la reconnaissance d'un individu par ses empreintes, comme par exemple, ses empreintes digitales, palmaires ou autres.

On connaît un procédé de traitement d'une image de l'empreinte digitale d'un individu de l'état de la technique qui comprend une partie acquisition au cours de laquelle l'image de l'empreinte est capturée et une partie identification au cours de laquelle l'image ainsi capturée est soit comparée avec des images de référence, soit transformée en une "template" qui est comparée avec des "templates" de référence.

La partie identification du procédé de traitement se poursuit par une identification de l'individu si la comparaison est positive et par une non-identification de l'individu si la comparaison est négative.

Le procédé de traitement de l'état de la technique est mis en oeuvre dans un dispositif de traitement comprenant une vitre d'exposition derrière laquelle sont disposés des moyens de capture.

La capture de l'image de l'empreinte peut s'effectuer de deux manières distinctes.

La capture peut s'effectuer avec contact. L'image de l'empreinte est alors capturée lorsque le doigt est en contact avec la vitre d'exposition. La capture avec contact permet de capturer des images d'empreintes qui sont compatibles avec la majorité des bases de données existantes d'empreintes ou de templates après transformation.

La capture avec contact de l'image peut s'effectuer à travers un prisme et l'image est alors obtenue grâce au couplage optique qui s'effectue entre la peau et la vitre d'exposition et en particulier, grâce à la réflexion totale qui est réalisée sur les zones de contact entre la vitre d'exposition et le doigt et qui permet une augmentation du contraste. Le couplage optique est fortement dépendant de l'environnement, par exemple, dans le cas d'un doigt sec, le couplage ne s'effectue pas correctement. Une solution consiste alors à ajouter un revêtement spécial sur la vitre d'exposition. Un tel revêtement est fragile et la vitre d'exposition doit alors être régulièrement vérifiée, voire remplacée.

La capture avec contact peut s'effectuer à travers une vitre. Le phénomène de réflexion totale n'est plus utilisé, et la capture n'est plus dépendante du couplage optique. Par contre, une telle capture est fortement dépendante de l'écrasement du doigt et donc de l'empreinte sur la vitre. Il y a peu d'ombres générées et une telle capture ne permet de recueillir qu'une faible quantité d'informations. Il y a alors diminution du contraste lié aux ombres lors du contact et donc des pertes d'informations du fait de l'écrasement de l'empreinte.

La capture peut s'effectuer sans contact. L'image de l'empreinte est alors capturée sans que celle-ci soit en contact avec la vitre d'exposition. La capture sans contact permet de capturer des images de l'empreinte digitale non déformée et de recueillir ainsi plus d'informations caractéristiques de l'empreinte sur de telles images que sur des images avec contact, du fait d'un meilleur contraste. Mais les images d'empreintes recueillies ne sont pas interopérables avec la majorité des bases de données existantes d'empreintes ou de templates.

Le document intitulé "The Surround Imager: A Multi-camera Touchless Device to Acquire 3D Rolled-Fingerprints" divulgue un dispositif de capture d'empreinte sans contact, l'acquisition sans contact évitant les déformations de l'empreinte sur une vitre d'exposition. Les images, ainsi capturées, sont ensuite traitées pour construire une représentation en 3D de ladite empreinte.

Dans la mesure où les bases de données d'empreintes existantes sont basées sur des images d'empreintes capturées avec contact, l'image de l'empreinte saris contact doit être déformée de manière à être compatible avec les images des bases de données existantes.

A cette fin, la représentation 3D de l'empreinte est, dans le document de l'état de la technique, électroniquement déformée de manière à reproduire l'écrasement de l'empreinte sur la vitre d'exposition. La déformation est ici générée automatiquement sans qu'il soit nécessaire de faire appel à une image de l'empreinte capturée avec contact.

Un tel procédé qui ne prend pas en compte les éléments spécifiques de chaque empreinte ne permet pas d'obtenir les meilleurs résultats possibles.

Un objet de la présente invention est de proposer un procédé de traitement d'au moins une image d'une empreinte d'un individu qui ne présente pas les inconvénients de l'état de la technique, et qui, en particulier, permet d'obtenir des images d'empreintes présentant un maximum d'informations tout en restant interopérable avec les bases de données existantes.

A cet effet, est proposé un procédé de traitement d'au moins une image d'une empreinte d'un individu par un dispositif de traitement comprenant une vitre d'exposition dont une face est prévue pour recevoir ladite empreinte, le procédé comprenant :
- une étape de capture sans contact d'au moins une image sans contact de l'empreinte présente dans l'espace en amont de ladite face et qui n'est pas encore en contact avec celle-ci,
- une étape de détection du contact de ladite empreinte avec la vitre d'exposition,
- une étape de capture avec contact d'au moins une image avec contact de l'empreinte après sa mise en contact avec la vitre d'exposition, et
- une étape de normalisation d'au moins l'une des images sans contact dans des proportions identiques à celles de l'une des images avec contact par analyse d'au moins une des images sans contact et d'au moins une des images avec contact.

Avantageusement, le procédé comprend antérieurement à l'étape de capture sans contact, une étape de détection de l'approche de ladite empreinte de la vitre d'exposition.

Selon un mode de réalisation particulier, l'étape de normalisation consiste en un repérage d'une pluralité de points caractéristiques communs à l'une des images sans contact et à l'une des images avec contact, puis en une superposition des points caractéristiques de l'image sans contact considérée à ceux de l'image avec contact considérée par l'application de transformations géométriques à l'image sans contact considérée.

Selon un autre mode de réalisation particulier, l'étape de normalisation consiste à ramener globalement ou localement la fréquence de sillons d'au moins une image sans contact à la fréquence de sillons d'au moins une image avec contact.

Avantageusement, l'étape de détection du contact de l'empreinte avec la vitre d'exposition consiste en une comparaison de deux images capturées successives, en une détermination d'une déformation entre les deux images, et en une validation du contact de l'empreinte, si la détermination est positive.

Selon un mode de réalisation particulier, le procédé de traitement comprend, postérieurement à l'étape de normalisation, une étape de comparaison de l'image sans contact normalisée avec des images d'empreintes de référence et une étape d'identification de l'individu lorsque l'étape de comparaison est positive ou une étape de non-identification lorsque l'étape de comparaison est négative.

Selon un mode de réalisation particulier, le procédé de traitement comprend, postérieurement à l'étape de normalisation, une étape de transformation de l'image sans contact normalisée en une template puis une étape de comparaison de ladite template avec des templates de référence et une étape d'identification de l'individu lorsque l'étape de comparaison est positive ou une étape de non-identification lorsque l'étape de comparaison est négative.

L'invention propose également un dispositif de traitement d'au moins une image d'une empreinte d'un individu comprenant :
- une vitre d'exposition dont une face est prévue pour recevoir ladite empreinte,
- des moyens de capture sans contact prévus pour capturer au moins une image sans contact de l'empreinte présente dans l'espace en amont de ladite face et qui n'est pas encore en contact avec celle-ci,
- des premiers moyens de détection prévus pour détecter la mise en contact de l'empreinte avec la vitre d'exposition,
- des moyens de capture avec contact prévus pour capturer au moins une image avec contact de l'empreinte après sa mise en contact avec la vitre d'exposition, et
- des moyens de normalisation prévus pour normaliser au moins l'une des images sans contact dans des proportions identiques à celles de l'une des images avec contact par analyse d'au moins une des images sans contact et d'au moins une des images avec contact.

Avantageusement, le dispositif de traitement comprend des deuxièmes moyens de détection prévus pour détecter l'approche de l'empreinte de la vitre d'exposition.

Avantageusement, les moyens de capture sans contact et les moyens de capture avec contact sont confondus.

Avantageusement, les moyens de normalisation sont prévus pour repérer une pluralité de points caractéristiques communs à l'une des images sans contact et à l'une des images avec contact, pour appliquer des transformations géométriques à l'image sans contact considérée pour superposer les points caractéristiques de l'image sans contact considérée à ceux de l'image avec contact considérée.

Avantageusement, les moyens de normalisation sont prévus pour ramener globalement ou localement la fréquence de sillons d'au moins une image sans contact à la fréquence de sillons d'au moins une image avec contact.

Avantageusement, les premiers moyens de détection sont prévus pour comparer deux images capturées successives, pour déterminer une déformation entre les deux images, et pour valider le contact de l'empreinte.

Selon un mode de réalisation particulier, le dispositif de traitement comprend des moyens de comparaison de l'image sans contact normalisée avec des images d'empreintes de référence et des moyens de décision quant à l'identité de l'individu.

Selon un mode de réalisation particulier, le dispositif de traitement comprend des moyens de transformation de l'image sans contact normalisée en une template, des moyens de comparaison de la template ainsi créée avec des templates de référence et des moyens de décision quant à l'identité de l'individu.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est un algorithme d'un procédé de traitement selon l'invention, et
la Fig. 2 représente un dispositif de traitement selon l'invention.

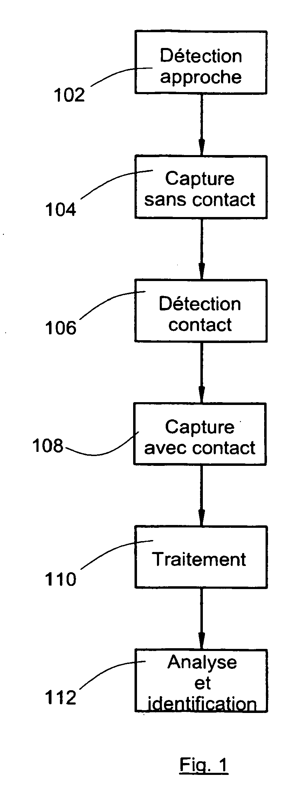

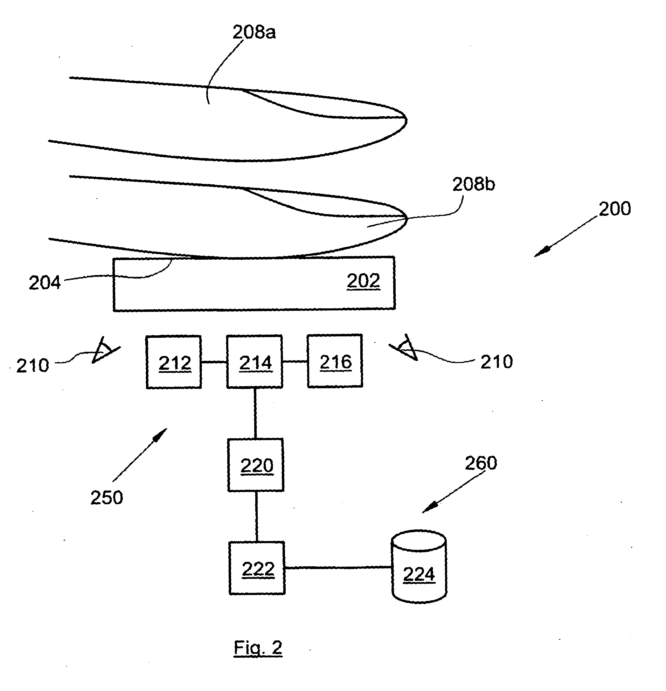

La Fig. 1 est un algorithme d'un procédé de traitement d'au moins une image d'une empreinte d'un individu mis en oeuvre par un dispositif de traitement 200 représenté à la Fig. 2.

La description qui suit est plus particulièrement centrée sur une image d'une empreinte digitale d'un doigt d'un individu, mais elle s'applique de la même manière pour une image d'une empreinte palmaire, pour une empreinte de plusieurs doigts, ou plus généralement pour toute empreinte d'une partie du corps d'un individu.

Un individu désirant se faire identifier par le dispositif de traitement 200 approche son doigt dudit dispositif Le doigt est ici représenté à la Fig. 2 dans une première position dans laquelle il n'est pas en contact avec ledit dispositif de traitement 200 et dans laquelle il est référencé 208a. Le même doigt est également représenté dans une deuxième position dans laquelle il est en contact avec ledit dispositif de traitement 200 et dans laquelle il est référencé 208b.

A cette fin, le dispositif de traitement 200 comprend un module d'acquisition 250, qui comprend une vitre d'exposition 202 sur laquelle est définie une surface de contact 204 sur laquelle le doigt 208b et par conséquent l'empreinte, vient se placer. Afin d'améliorer le contraste de l'empreinte digitale, des moyens d'éclairement 210 sont disposés sous la vitre d'exposition 202 de manière à éclairer le doigt lors de son déplacement entre la première position et la deuxième position, ainsi qu'après sa mise en contact avec la vitre d'exposition 202.

Selon un autre mode de réalisation de l'invention qui n'est pas représenté, des moyens d'éclairement sont disposés au-dessus de la vitre d'exposition 202 et sont orientés de manière à l'éclairer. Cette disposition permet d'éclairer le doigt 208a lors de son approche.

Selon un autre mode de réalisation de l'invention qui n'est pas représenté ici, des moyens d'éclairement sont disposés à l'intérieur de la vitre d'exposition 202 et sont agencés de manière à l'éclairer. Cette disposition permet d'éclairer le doigt lorsqu'il est proche de la vitre d'exposition 202 ou lorsqu'il est sur la vitre d'exposition.

Le module d'acquisition 250 comprend :
- des moyens de capture sans contact 214 prévus pour capturer au moins une image sans contact de l'empreinte présente dans l'espace en amont de la surface de contact 204 et qui n'est pas encore en contact avec celle-ci,
- des premiers moyens de détection 216 prévus pour détecter la mise en contact du doigt 208b et donc de l'empreinte avec la vitre d'exposition 202,
- des moyens de capture avec contact 214 prévus pour capturer au moins une image avec contact de l'empreinte dudit doigt 208b après sa mise en contact avec la vitre d'exposition 202, et
- des moyens de normalisation 220 prévus pour réaliser un traitement d'image d'au moins une des images sans contact en fonction d'au moins une image avec contact. Le traitement mis en oeuvre par les moyens de normalisation consiste en particulier à redimensionner au moins l'une des images sans contact dans des proportions identiques à celles de l'une des images avec contact.

Dans ce mode de réalisation, le dispositif de traitement 200 capture une multitude d'images sans contact de l'espace en amont de la surface de contact 204 et lorsqu'un contact sur la vitre d'exposition 202 est détecté, l'image ou les images sans contact qui ont été capturées juste avant ledit contact, portent l'empreinte du doigt 208a lors de son approche de la vitre d'exposition 202. L'espace en amont de la surface de contact 204 s'étend au-dessus de la surface de contact 204 dans le volume où se déplace le doigt 208a, 208b. Au moins l'une des images sans contact de l'espace amont porte alors l'empreinte sans contact.

Ce mode de réalisation est très consommateur d'énergie puisque le dispositif de traitement 200 capture en permanence des images qui ne sont pas utilisées. Afin de réduire cette consommation, des deuxièmes moyens de détection 212 prévus pour détecter l'approche du doigt 208a, et par conséquent de l'empreinte, de la vitre d'exposition 202 sont incorporés dans le dispositif de traitement 200.

Dans le mode de réalisation de l'invention représenté à la Fig. 2, les moyens de capture sans contact 214 et les moyens de capture avec contact 214 sont confondus et sont constitués, par exemple, d'une unique caméra.

Selon un mode de réalisation particulier, la normalisation consiste, pour les moyens de normalisation 220, à repérer une pluralité de points caractéristiques communs à l'une des images de l'empreinte sans contact et à l'une des images de l'empreinte avec contact, puis à appliquer, à l'image sans contact considérée, des transformations géométriques de manière à superposer les points caractéristiques de l'image sans contact considérée à ceux de l'image avec contact considérée. A cet effet, les moyens de normalisation 220 comprennent des moyens de repérage prévus pour repérer ladite pluralité de points, des moyens de transformation géométrique prévus pour appliquer lesdites transformations géométriques à l'image sans contact considérée.

Selon un autre mode de réalisation de l'invention, la normalisation consiste pour les moyens de normalisation 220 à ramener globalement ou localement la fréquence de sillons d'au moins une image sans contact à la fréquence de sillons d'au moins une image avec contact. A cet effet, les moyens de normalisation 220 comprennent des moyens de changement de fréquence prévus pour déterminer la fréquence de sillons d'au moins une image sans contact et la fréquence de sillons d'au moins une image avec contact, pour appliquer un facteur multiplicateur à la fréquence de sillons de l'image sans contact afin de l'égaliser avec la fréquence de sillons de l'images avec contact et pour ajuster les dimensions de l'image sans contact en fonction de ce facteur multiplicateur. Une empreinte comprend des sillons qui, localement, peuvent être approximés par des lignes parallèles. Localement, il est alors possible de définir la fréquence de sillons comme étant le nombre de sillons par unité de longueur. Une fréquence globale peut ensuite en être déduite.

C'est-à-dire que d'une manière générale, la normalisation s'effectue par analyse d'au moins une des images sans contact et d'au moins une des images avec contact.

Le module d'acquisition 250 permet ainsi l'acquisition d'au moins une image de l'empreinte du doigt sans contact et ayant subi des transformations adéquates. Cette image peut ensuite être sauvegardée dans une base de données afin de devenir une image de référence ou être analysée de manière à valider ou invalider l'identité de l'individu.

La position du centre de l'empreinte est quasiment invariante entre l'image capturée avec contact et l'image capturée sans contact mais les contours et les limites de l'empreinte sont étirés sur l'image capturée avec contact par rapport à l'image capturée sans contact. Les transformations géométriques concernées peuvent être des agrandissements, des rotations, des translations, mais elles concernent principalement des étirements selon des axes particuliers des contours et des limites de l'empreinte de l'image capturée sans contact.

L'image sans contact de l'empreinte du doigt 208a ainsi transformée contient alors l'ensemble des informations de l'image sans contact avant transformation et est dimensionnée pour être interopérable avec les bases de données existantes. Le dispositif de traitement 200 permet de s'affranchir du couplage optique et permet l'acquisition de doigts secs.

Un tel dispositif de traitement 200 permet également de dissocier la vitre d'exposition 202 des moyens de capture 214. Il est alors possible de déporter ces derniers afin de les enfermer dans une enceinte sécurisée ou d'améliorer l'ergonomie du dispositif de traitement 200.

Dans le cas où le dispositif de traitement 200 est prévu pour valider ou invalider l'identité de l'individu, il comprend un module d'identification 260.

Le module d'identification 260 comprend une base de données 224 et il est prévu pour recevoir l'image sans contact transformée et soit la comparer avec les images de la base de données 224, soit la transformer en une template et comparer cette dernière avec les templates de la base de données 224, puis de prendre une décision quant à l'identité de l'individu sur la base du résultat de l'une ou l'autre des comparaisons. En fonction du résultat de la comparaison correspondante, le module d'identification 260 valide ou invalide l'identification de l'individu.

A cette fin, le module d'identification 260 comprend des moyens de comparaison 222 d'au moins une image sans contact normalisée et éventuellement d'au moins une image avec contact avec les images d'empreintes de référence et des moyens de décision 222 quant à l'identité de l'individu, lorsque la base de données 224 contient des images d'empreintes.

Lorsque la base de données 224 contient des templates, le module d'identification 260 comprend des moyens de transformation 222 d'au moins une image sans contact normalisée en au moins une template, des moyens de comparaison 222 de la ou chaque template ainsi créée avec les templates de référence et des moyens de décision 222 quant à l'identité de l'individu.

Les deuxièmes moyens de détection 212 et les premiers moyens de détection 216 peuvent prendre différentes formes. Par exemple, ils peuvent être constitués d'émetteurs et de récepteurs infrarouges prévus pour éclairer le doigt 208a, 208b et en déterminer la distance par rapport à la vitre d'exposition 202 après réflexion. Par exemple, ils peuvent être constitués de moyens de calcul qui analysent les différentes images capturées afin d'en déduire le moment où le doigt vient en contact avec la vitre d'exposition 202. En effet, la déformation de l'empreinte lors du contact est suffisamment importante pour pouvoir être détectée par lesdits moyens de calcul après comparaison entre deux images successives. Les premiers moyens de détection 216 sont alors prévus pour comparer deux images capturées successives, pour déterminer une déformation entre les deux images, et pour valider le contact du doigt 208b lorsqu'une déformation minimale est détectée.

Le procédé de traitement représenté à la Fig. 1 comprend une partie consacrée à la capture et à la normalisation d'au moins une image de l'empreinte du doigt 208a, 208b.

Le procédé de traitement comprend :
- une étape 104 de capture sans contact d'au moins une image sans contact de l'empreinte présente dans l'espace en amont de ladite face et qui n'est pas encore en contact avec celle-ci,
- une étape 106 de détection du contact du doigt 208b et donc de l'empreinte avec la vitre d'exposition 202,
- une étape 108 de capture avec contact d'au moins une image avec contact de l'empreinte dudit doigt 208b après sa mise en contact avec la vitre d'exposition 202, et
- une étape 110 de traitement d'au moins une des images sans contact en fonction d'au moins une image avec contact par normalisation, et en particulier redimensionnement, de l'image sans contact dans des proportions identiques à celles de l'image avec contact. L'étape 110 de traitement constitue ainsi une étape de normalisation.

Le procédé d'acquisition permet ainsi l'acquisition d'au moins une image de l'empreinte du doigt sans contact et ayant subi des transformations adéquates.

Comme cela a été décrit ci-dessus, au cours du procédé de traitement, une multitude d'images est capturée avant la détection du contact du doigt 208b sur la vitre d'exposition 202 et la normalisation s'applique à l'image ou aux images capturées juste avant le contact, c'est-à-dire aux images de l'empreinte du doigt 208a qui ont été capturées lors de son approche.

Afin de limiter la consommation d'énergie, une étape 102 de détection de l'approche du doigt 208a, et par conséquent de l'empreinte, de la vitre d'exposition 202 est mise en place antérieurement à l'étape 104 de capture sans contact.

Selon un mode de réalisation particulier, l'étape de normalisation 110 consiste en un repérage d'une pluralité de points caractéristiques communs à l'une des images de l'empreinte sans contact et à l'une des images de l'empreinte avec contact, puis en une superposition des points caractéristiques de l'image sans contact considérée à ceux de l'image avec contact considérée par l'application de transformations géométriques à l'image sans contact considérée.

Selon un autre mode de réalisation, l'étape de normalisation consiste à ramener globalement ou localement la fréquence de sillons d'au moins une image sans contact à la fréquence de sillons d'au moins une image avec contact.

C'est-à-dire que d'une manière générale, la normalisation s'effectue par analyse d'au moins une des images sans contact et d'au moins une des images avec contact. Ainsi, la normalisation prend en compte à la fois l'image avec contact et l'image sans contact, permettant ainsi une meilleure prise en compte des spécificités de chaque empreinte.

Selon un mode de réalisation particulier, l'étape 106 de détection du contact du doigt 208b avec la vitre d'exposition 202 consiste en une comparaison de deux images capturées successives, en une détermination d'une déformation entre les deux images, et en une validation du contact du doigt 208b, si la détermination est positive.

Dans le cas où le procédé de traitement est prévu pour valider ou invalider l'identité de l'individu, il comprend, postérieurement à l'étape de normalisation 110, une étape de comparaison d'au moins une image sans contact normalisée et éventuellement d'au moins une image avec contact avec des images d'empreintes de référence et une étape d'identification de l'individu lorsque l'étape de comparaison est positive ou une étape de non-identification lorsque l'étape de comparaison est négative.

Lorsque la base de données 224 contient des templates de référence, le procédé de traitement comprend, postérieurement à l'étape de normalisation 110, une étape de transformation d'au moins une image sans contact normalisée en au moins une template puis une étape de comparaison de la ou chaque template avec des templates de référence et une étape d'identification de l'individu lorsque l'étape de comparaison est positive ou une étape de non-identification lorsque l'étape de comparaison est négative.

Il est possible de mettre en oeuvre d'autres modes de réalisation dans lesquels à partir de plusieurs images (sans contact et normalisées et avec contact) plusieurs comparaisons sont effectuées, ou une template est générée et comparée avec les templates de référence. La template constituée à partir de plusieurs images apporte plus d'informations et permet une meilleure identification.

Il est également possible à partir de plusieurs images de reconstruire une seule image de meilleure qualité comportant à la fois les informations issues des images sans contact normalisées et des images avec contact.

La certitude de l'identification est plus importante que dans le cas de l'identification de l'état de la technique du fait que les images ou les templates comparées sont porteuses d'un plus grand nombre d'informations.

En outre, la capture d'images sans contact permet un gain de temps par rapport aux techniques de l'état de la technique puisque des images sont capturées préalablement à la mise en contact du doigt 208b.

Bien entendu, la présente invention n'est pas limitée aux exemples et modes de réalisation décrits et représentés, mais elle est susceptible de nombreuses variantes accessibles à l'homme de l'art.

Par exemple, dans le cas où la partie concerne un ensemble de plusieurs doigts qui vient en contact avec la surface de contact, chaque doigt peut être traité indépendamment des autres. En effet, l'ensemble des doigts ne vient pas forcément en contact avec la surface de contact de manière simultanée. Chaque contact peut être détecté et donner lieu à un procédé de traitement conforme à celui de l'invention.

L'identification de l'individu peut ensuite porter sur tous les doigts ou sur uniquement certains d'entre eux.

## Revendications

1. Procédé de traitement d'au moins une image d'une empreinte d'un individu par un dispositif de traitement (200) comprenant une vitre d'exposition (202) dont une face est prévue pour recevoir ladite empreinte, le procédé comprenant :
- une étape (102) de détection de l'approche de ladite empreinte de la vitre d'exposition (202)
- une étape (104) de capture d'au moins une image sans contact de l'empreinte présente dans l'espace en amont de ladite face et qui n'est pas encore en contact avec celle-ci,
- une étape (106) de détection du contact de ladite empreinte avec la vitre d'exposition (202),
- une étape (108) de capture avec contact d'au moins une image avec contact de l'empreinte après sa mise en contact avec la vitre d'exposition (202), et
- une étape (110) de normalisation d'au moins l'une des images sans contact dans des proportions identiques à celles de l'une des images avec contact par analyse d'au moins une des images sans contact et d'au moins une des images avec contact.

2. Procédé de traitement selon la revendication 1, **caractérisé en ce que** l'étape de normalisation consiste en un repérage d'une pluralité de points caractéristiques communs à l'une des images sans contact et à l'une des images avec contact, puis en une superposition des points caractéristiques de l'image sans contact considérée à ceux de l'image avec contact considérée par l'application de transformations géométriques à l'image sans contact considérée.

3. Procédé de traitement selon la revendication 1, **caractérisé en ce que** l'étape de normalisation consiste à ramener globalement ou localement la fréquence de sillons d'au moins une image sans contact à la fréquence de sillons d'au moins une image avec contact.

4. Procédé de traitement selon l'une des revendications 1 à 3, **caractérisé en ce que** l'étape (106) de détection du contact de l'empreinte avec la vitre d'exposition (202) consiste en une comparaison de deux images capturées successives, en une détermination d'une déformation entre les deux images, et en une validation du contact de l'empreinte, si la détermination est positive.

5. Procédé de traitement selon l'une des revendications 1 à 4, **caractérisé en ce qu'**il comprend, postérieurement à l'étape de normalisation (110), une étape de comparaison d'au moins une image sans contact normalisée et éventuellement d'au moins une image avec contact avec des images d'empreintes de référence et une étape d'identification de l'individu lorsque l'étape de comparaison est positive ou une étape de non-identification lorsque l'étape de comparaison est négative.

6. Procédé de traitement selon l'une des revendications 1 à 5, **caractérisé en ce qu'**il comprend, postérieurement à étape de normalisation (110), une étape de transformation d'au moins une image sans contact normalisée en au moins une template puis une étape de comparaison de la ou chaque template avec des templates de référence et une étape d'identification de l'individu lorsque l'étape de comparaison est positive ou une étape de non-identification lorsque l'étape de comparaison est négative.

7. Dispositif de traitement (200) d'au moins une image d'une empreinte d'un individu comprenant :
- une vitre d'exposition (202) dont une face est prévue pour recevoir ladite empreinte,
- des moyens de capture sans contact (214) prévus pour capturer au moins une image sans contact de l'empreinte présente dans l'espace en amont de ladite face et qui n'est pas encore en contact avec celle-ci,
- des premiers moyens de détection (216) prévus pour détecter la mise en contact de l'empreinte avec la vitre d'exposition (202),
- des deuxièmes moyens de détection (212) prévus pour détecter l'approche de l'empreinte de la vitre d'exposition (202),
- des moyens de capture avec contact (214) prévus pour capturer au moins une image avec contact de l'empreinte après sa mise en contact avec la vitre d'exposition (202), et
- des moyens de normalisation (220) prévus pour normaliser au moins l'une des images sans contact dans des proportions identiques à celles de l'une des images avec contact par analyse d'au moins une des images sans contact et d'au moins une des images avec contact.

8. Dispositif de traitement selon la revendication 7, **caractérisé en ce que** les moyens de capture sans contact (214) et les moyens de capture avec contact (214) sont confondus.

9. Dispositif de traitement (200) selon l'une des revendications 7 à 9, **caractérisé en ce que** les moyens de normalisation sont prévus pour repérer une pluralité de points caractéristiques communs à l'une des images sans contact et à l'une des images avec contact, pour appliquer des transformations géométriques à l'image sans contact considérée pour superposer les points caractéristiques de l'image sans contact considérée à ceux de l'image avec contact considérée.

10. Dispositif de traitement (200) selon l'une des revendications 7 à 9, **caractérisé en ce que** les moyens de normalisation sont prévus pour ramener globalement ou localement la fréquence de sillons d'au moins une image sans contact à la fréquence de sillons d'au moins une image avec contact.

11. Dispositif de traitement (200) selon l'une des revendications 7 à 10, **caractérisé en ce que** les premiers moyens de détection (216) sont prévus pour comparer deux images capturées successives, pour déterminer une déformation entre les deux images, et pour valider le contact de l'empreinte.

12. Dispositif de traitement (200) selon l'une des revendications 7 à 11, **caractérisé en ce qu'**il comprend des moyens de comparaison (222) d'au moins une image sans contact normalisée et éventuellement d'au moins une image avec contact avec des images d'empreintes de référence et des moyens de décision (222) quant à l'identité de l'individu.

13. Dispositif de traitement (200) selon l'une des revendications 7 à 12, **caractérisé en ce qu'**il comprend des moyens de transformation (222) d'au moins une image sans contact normalisée en au moins une template, des moyens de comparaison (222) de la ou chaque template ainsi créée avec des templates de référence et des moyens de décision (222) quant à l'identité de l'individu.

## Claims

1. Method of processing at least one image of an individual's print using a processing apparatus (200) comprising an exposure platen (202) one surface of which is designed to receive said print, the method comprising:
- a step (102) of detecting the approach of said print to the exposure platen (202)
- a step (104) of capturing at least one non-contacted image of the print present in the space upstream of said surface and not yet in contact with the latter,
- a step (106) of detecting the contact of said print with the exposure platen (202),
- a step (108) of capturing, with contact, at least one contacted image of the print after it has been brought into contact with the exposure platen (202), and
- a step (110) of standardising at least one of the non-contacted images in proportions identical to those of one of the contacted images by analysing at least one of the non-contacted images and at least one of the contacted images.

2. Processing method according to claim 1, **characterised in that** the standardising step consists in locating a plurality of characteristic points common to one of the non-contacted images and to one of the contacted images, then superimposing the points characteristic of the non-contacted image in question with those of the contacted image in question by applying geometric transformations to the non-contacted image in question.

3. Processing method according to claim 1, **characterised in that** the standardising step consists in globally or locally adjusting the frequency of grooves in at least one non-contacted image to the frequency of grooves in at least one contacted image.

4. Processing method according to one of claims 1 to 3, **characterised in that** the step (106) of detecting the contact of the print with the exposure platen (202) consists in comparing two successive captured images, im determining a deformation between the two images, and in validating the contact of the print, if the determination is positive.

5. Processing method according to one of claims 1 to 4, **characterised in that** it comprises, subsequent to the standardisation step (110), a step of comparing at least one standardised non-contacted image and optionally at least one contacted image with reference images of prints and a step of identifying the individual when the comparison step is positive or a step of non-identification when the comparison step is negative.

6. Processing method according to one of claims 1 to 5, **characterised in that** it comprises, subsequent to the standardisation step (110), a step of converting at least one standardised non-contacted image into at least one template and then a step of comparing the or each template with reference templates and a step of identifying the individual when the comparison step is positive or a step of non-identification when the comparison step is negative.

7. Apparatus (200) for processing at least one image of an individual's print, comprising:
- an exposure platen (202) one surface of which is designed to receive said print,
- non-contacted capturing means (214) designed to capture at least one non-contacted image of the print present in the space upstream of said surface and not yet in contact with the latter,
- first detecting means (216) designed to detect the contact of the print with the exposure platen (202),
- second detecting means (212) designed to detect the approach of the print to the exposure platen (202),
- contact capturing means (214) designed to capture at least one contacted image of the print after it has been brought into contact with the exposure platen (202), and
- standardising means (220) designed to standardise at least one of the non-contacted images in proportions identical to those of one of the contacted images by analysing at least one of the non-contacted images and at least one of the contacted images.

8. Processing apparatus according to claim 7, **characterised in that** the non-contacted capturing means (214) and the contact capturing means (214) are merged together.

9. Processing apparatus (200) according to one of claims 7 to 9, **characterised in that** the standardising means are designed to locate a plurality of characteristic points common to one of the non-contacted images and to one of the contacted images, to apply geometric transformations to the non-contacted image in question in order to superimpose the points characteristic of the non-contacted image in question on those of the contacted image in question.

10. Processing apparatus (200) according to one of claims 7 to 9, **characterised in that** the standardising means are designed to globally or locally adjust the frequency of grooves in at least one non-contacted image to the frequency of grooves in at least one contacted image.

11. Processing apparatus (200) according to one of claims 7 to 10, **characterised in that** the first detecting means (216) are designed to compare two successive captured images, to determine a deformation between the two images, and to validate the contact of the print.

12. Processing apparatus (200) according to one of claims 7 to 11, **characterised in that** it comprises means (222) for comparing at least one standardized non-contacted image and optionally at least one contacted image with reference images of prints and means (222) for deciding as to the identity of the individual.

13. Processing apparatus (200) according to one of claims 7 to 12, **characterised in that** it comprises means (222) for converting at least one standardised non-contacted image into at least one template, means (222) for comparing the or each template thus created with reference templates and means (222) for deciding as to the identity of the individual.

## Patentansprüche

1. Verarbeitungsverfahren zum Verarbeiten wenigstens eines Bildes eines Abdrucks einer Person mittels einer Verarbeitungsanordnung (200), die ein Belichtungsfenster (202) aufweist, von dem eine Fläche dazu vorgesehen ist, den Abdruck aufzunehmen, wobei das Verfahren umfasst:
- einen Schritt (102) des Erfassens der Annäherung des Abdrucks an das Belichtungsfenster (202),
- einen Schritt (104) der Aufnahme wenigstens eines Bildes ohne Kontakt des sich im Raum vor der Fläche angeordneten Abdrucks, der sich noch nicht in Kontakt dieser befindet,
- einen Schritt (106) des Erfassens des Kontakts des Abdrucks mit dem Belichtungsfenster (202),
- einen Schritt (108) der Aufnahme mit Kontakt wenigstens eines Bildes mit Kontakt des Abdrucks, nachdem dieser in Kontakt mit dem Aufnahmefenster (202) gebracht wurde, und
- einen Schritt (110) der Normierung wenigstens des einen der Bilder ohne Kontakt auf Abmessungen, die identisch zu denen des einen der Bilder mit Kontakt sind, durch Analyse wenigstens eines der Bilder ohne Kontakt und wenigstens eines der Bilder mit Kontakt.

2. Verarbeitungsverfahren nach Anspruch 1,
**dadurch gekennzeichnet, dass**
der Schritt der Normierung aus einer Kennzeichnung mehrerer charakteristischer Punkte, die sowohl in dem einen der Bilder ohne Kontakt, als auch in dem einen der Bilder mit Kontakt vorhanden sind, gefolgt von einer Überlagerung der charakteristischen Punkte des betrachteten Bildes ohne Kontakt mit denjenigen des betrachteten Bildes mit Kontakt durch eine Anwendung geometrischer Transformationen auf das betrachtete Bild ohne Kontakt umfasst.

3. Verarbeitungsverfahren nach Anspruch 1,
**dadurch gekennzeichnet, dass**
der Schritt der Normierung darin besteht, global oder lokal die Frequenz an Furchen wenigstens eines Bildes ohne Kontakt auf die Frequenz der Furchen wenigstens eines Bildes mit Kontakt zurückzuführen.

4. Verarbeitungsverfahren nach einem der Ansprüche 1 bis 3,
**dadurch gekennzeichnet, dass**
der Schritt (106) des Erfassens des Kontaktes des Abdrucks mit dem Belichtungsfenster (202) aus einem Vergleich zweier aufeinander folgend aufgenommener Bilder, einer Erfassung einer Deformation zwischen den beiden Bildern und einer Bestätigung des Kontakts des Abdrucks, falls die Erfassung positiv ist, besteht.

5. Verarbeitungsverfahren nach einem der Ansprüche 1 bis 4,
**dadurch gekennzeichnet, dass**
das Verfahren nach dem Schritt der Normierung (110) einen Schritt eines Vergleichs wenigstens eines normierten Bildes ohne Kontakt sowie gegebenenfalls wenigstens eines Bildes mit Kontakt mit Bildern von Referenzabdrücken sowie einen Schritt der Identifizierung der Person, falls der Schritt des Vergleichs positiv ausfällt, oder einen Schritt der Nichtidentifizierung, falls der Schritt des Vergleichs negativ ausfällt, umfasst.

6. Verarbeitungsverfahren nach einem der Ansprüche 1 bis 5
**dadurch gekennzeichnet, dass**
das Verfahren nach dem Schritt der Normierung (110) einen Schritt der Umwandlung wenigstens eines normierten Bildes ohne Kontakt in wenigstens eine Vorlage und einen darauf folgenden Schritt des Vergleichs der oder jeder Vorlage mit Referenzvorlagen sowie einen Schritt der Identifizierung der Person, wenn der Schritt des Vergleichs positiv ausfällt, oder einen Schritt der Nichtidentifizierung, falls der Schritt des Vergleichens negativ ausfällt, umfasst.

7. Verarbeitungsanordnung (200) zum Verarbeiten wenigstens eines Bildes eines Abdrucks einer Person umfassend:
- ein Belichtungsfenster (202) von dem eine Fläche dazu vorgesehen ist, den Abdruck aufzunehmen,
- Mittel zur Aufnahme ohne Kontakt (214), die dazu vorgesehen sind, wenigstens ein Bild ohne Kontakt des sich im Raum vor der Fläche befindlichen Abdrucks, der noch nicht in Kontakt mit der Fläche steht, aufzunehmen,
- erste Erfassungsmittel (216), die dazu vorgesehen sind, den Kontakt des Abdrucks mit dem Belichtungsfenster (202) zu erfassen,
- zweite Erfassungsmittel (212), die dazu vorgesehen sind, die Annäherung des Abdrucks an das Belichtungsfenster (202) zu erfassen,
- Mittel zur Aufnahme mit Kontakt (214), die dazu vorgesehen sind, wenigstens ein Bild mit Kontakt des Abdrucks aufzunehmen, nachdem dieser mit dem Belichtungsfenster (202) in Kontakt gebracht wurde, und
- Mittel zur Normierung (220), die dazu vorgesehen sind, wenigstens das eine der Bilder ohne Kontakt auf Abmessungen zu normieren, die identisch zu denen des einen der Bilder mit Kontakt sind, indem wenigstens eines der Bilder ohne Kontakt sowie eines der Bilder mit Kontakt analysiert werden.

8. Verarbeitungsanordnung nach Anspruch 7,
**dadurch gekennzeichnet, dass**
die Mittel zur Erfassung ohne Kontakt (214) und die Mittel zur Erfassung mit Kontakt (214) zusammengefasst sind.

9. Verarbeitungsanordnung (200) nach einem der Ansprüche 7 bis 9,
**dadurch gekennzeichnet, dass**
die Mittel zur Normierung dazu vorgesehen sind, mehrere charakteristische Punkte, die sowohl in dem einem Bilder ohne Kontakt, als auch in dem einem der Bilder mit Kontakt vorhanden sind, zu kennzeichnen und geometrische Transformationen auf das betrachtete Bild ohne Kontakt anzuwenden, um die charakteristischen Punkte des betrachteten Bildes ohne Kontakt mit denen des betrachteten Bildes mit Kontakt zu überlagern.

10. Verarbeitungsanordnung (200) nach einem der Ansprüche 7 bis 9,
**dadurch gekennzeichnet, dass**
die Mittel zur Normierung dazu vorgesehen sind, global oder lokal die Frequenz der Furchen wenigstens eines Bildes ohne Kontakt auf die Frequenz der Furchen wenigstens eines Bildes mit Kontakt zurückzuführen.

11. Verarbeitungsanordnung (200) nach einem der Ansprüche 7 bis 10,
**dadurch gekennzeichnet, dass**
die ersten Mittel zur Erfassung (216) dazu vorgesehen sind, zwei aufeinander folgend aufgenommene Bilder zu vergleichen, eine Deformation zwischen den beiden Bildern zu bestimmen und den Kontakt des Abdrucks zu bestätigen.

12. Verarbeitungsanordnung (200) nach einem der Ansprüche 7 bis 11,
**dadurch gekennzeichnet, dass**
sie Mittel zum Vergleichen (222) wenigstens eines normierten Bildes ohne Kontakt sowie gegebenenfalls wenigstens eines Bildes mit Kontakt mit Bildern von Referenzabdrücken zu vergleichen, und Mittel zur Entscheidung (222) hinsichtlich der Identität der Person umfasst.

13. Verarbeitungsanordnung (200) nach einem der Ansprüche 7 bis 12,
**dadurch gekennzeichnet, dass**
sie Mittel zur Transformation (222) wenigstens eines normierten Bildes ohne Kontakt in wenigstens eine Vorlage sowie Mittel zum Vergleich (222) der oder jeder auf diese Weise erzeugten Vorlage mit Referenzvorlagen sowie Mittel zur Entscheidung (222) hinsichtlich der Identität der Person umfasst.
